# EUROPÄISCHE PATENTSCHRIFT

(11) **EP 2 822 906 B1**
(45) Veröffentlichungstag und Bekanntmachung des Hinweises auf die Patenterteilung: **13.01.2021**
(21) Anmeldenummer: 13710340.4
(22) Anmeldetag: 08.03.2013
(51) Int. Cl.: C03C 17/30, C03C 27/04, E04F 13/14, C09D 183/04, C08G 77/16, B32B 17/10

(54) **GLASBAUELEMENT UND VERFAHREN ZU DESSEN HERSTELLUNG**
GLASS BUILDING PANEL AND METHOD FOR MANUFACTURING
COMPOSANT EN VERRE ET PROCÉDÉ DESTINÉ À SA FABRICATION

(30) Priorität: 09.03.2012 EP 12158888
(43) Veröffentlichungstag der Anmeldung: 14.01.2015
(60) Teilanmeldung: 17201438.3
(73) Patentinhaber: Sika Technology AG, 6340 Baar (CH)
(72) Erfinder: BUCK, Manuel, CH-5412 Gebenstorf (CH); MÜLLER, Ulli, CH-8903 Birmensdorf (CH); CUTRI, Enrico, CH-5630 Muri (CH); DÖBBEL, Florian, CH-8967 Widen (CH)
(74) Vertreter: Sika Patent Attorneys
(86) Internationale Anmeldenummer: PCT/EP2013/054780
(87) Internationale Veröffentlichungsnummer: WO 2013/132080

(56) Entgegenhaltungen:
- EP-A2- 0 347 049
- US-A- 4 814 230
- US-A1- 2009 202 842
- US-B2- 7 309 734

## Beschreibung

### Technisches Gebiet

Die Erfindung betrifft ein Glasbauelement, mit einer kunststoffbeschichteten Glastafel und mindestens einem hieran befestigten Montageelement, sowie ein Verfahren zur Herstellung eines solchen.

### Stand der Technik

Fassaden und Überdachungen, die gänzlich oder jedenfalls zu wesentlichen Teilen aus Glas bestehen, sind aus der modernen Architektur nicht mehr wegzudenken. Sie werden zumeist aus ebenen Glastafeln gebildet, die in geeignete (zumeist aus Stahl bestehende) Tragkonstruktionen eingesetzt werden. Vielfach sind diese Glastafeln eingefärbt und/oder mit Funktionsbeschichtungen versehen, um beispielsweise Infrarotstrahlung vom inneren eines Gebäudes fern zu halten oder bestimmte optische Effekte zu realisieren.

Bekannt sind insbesondere Glastafeln mit aufgedampften Dünnschichten, die das Reflexionsvermögen im Infrarot-Bereich und teils auch im sichtbaren Bereich und UV-Bereich erhöhen. Um qualitativ hochwertige Verglasungen zu erzeugen, die opak erscheinen, wird üblicherweise eine aufwendige und teure abtragende Oberflächenbehandlung des Glases ausgeführt.

Es ist, beispielsweise aus der US 4,814,230 oder der US 7,309,734 B2, auch bekannt, durch Auftrag einer pigmenthaltigen Elastomerschicht opake Glastafeln oder solche mit besonderen optischen Eigenschaften zu erzeugen, die durchaus qualitativ hohen Ansprüchen genügen können. Die EP 0 347 049 beschreibt zur Erläuterung verbesserter Primer-Zusammensetzungen von deren Einfluss auf die Festigkeit von Silicon-Verbindungen ein Labormuster, bei dem eine Glasplatte und platten- bzw. ein siebartiger Streifen aus verschiedenartig behandeltem Aluminium mittels eines Siliconklebers miteinander verbunden sind.

### Offenbarung der Erfindung

Mit der Erfindung wird ein Glasbauelement mit den Merkmalen des Anspruchs 1 bereitgestellt. Des Weiteren wird ein Verfahren zu dessen Herstellung in Anspruch 8 angegeben.

Ein Aspekt der Erfindung besteht darin, eine primär zur Erzielung optischer Effekte vorgesehene Beschichtung einer als Bauwerks-Element vorgesehenen Glastafel zugleich zu Befestigungszwecken zu nutzen. Dies bedeutet insbesondere deshalb eine Abkehr vom üblichen Vorgehen des Fachmanns, weil Schichten mit Befestigungswirkung (speziell Klebstoffschichten) üblicherweise nur in Teilbereichen größerer Teile gebildet werden, die für eine hinreichende Kraftübertragung benötigt werden. Bei den Beschichtungen der in Rede stehenden Art handelt es sich aber typischerweise - wenn auch nicht notwendigerweise - um auf eine gesamte Oberfläche der Glastafel aufgebrachte Kunststoffschichten. Diese zugleich zum Zweck der stoffschlüssigen Befestigung eines Montagelements auf der Glastafel zu nutzen, ist ein ebenso überraschender wie vorteilhafter Gedanke. Er ermöglicht erhebliche Vereinfachungen und Kostensteigerungen im Produktionsprozess, weil ein zusätzlicher und zudem typischerweise lokal exakt zu begrenzender Klebstoffauftrag entfallen kann.

Ein weiterer Vorteil der Erfindung besteht darin, dass die zum Zwecke der Befestigung des Montageelements relativ dick auszubildende Kunststoffschicht (speziell Elastomerschicht auf Siliconbasis) das Bruchverhalten des Glasbauelements verbessert und die Einhaltung von Sicherheitsbestimmungen erleichtert. Die Elastomerschicht hält Bruchstücke bis zu einem gewissen Grade im Verbund des Bauelements fest, kann also dazu beitragen, deren Herabfallen oder Davonfliegen zu verhindern.

In einer Ausführung der Erfindung ist der aufliegende Abschnitt des oder jedes Montageelements durch ein Lochblech gebildet, dessen Löcher mindestens teilweise von der Beschichtung der Glastafel durchdrungen sind. Diese Ausführung ist durch den Einsatz von kommerziell in großer Vielfalt verfügbaren einfachen Lochblechen flexibel in der Anwendung sowie kostengünstig und ermöglicht einen besonders innigen Formschluss zwischen Glastafel und Montageelement, also die Erzielung einer hohen Festigkeit ihrer Verbindung.

In einer weiteren Ausführung der Erfindung ist vorgesehen, dass die Oberfläche der Glastafel zu mehr als einem Viertel, insbesondere zu einem überwiegenden Flächenanteil, mit dem aufliegenden Abschnitt des Montageelements oder aufliegenden Abschnitten mehrerer Montagelemente bedeckt ist. Dies ermöglicht in vorteilhafter Weise eine gute Kraftverteilung bei der Montage der Glasbauelemente und die Vermeidung von Lastspitzen und hieraus resultierender Bruchgefahr.

In einer weiteren Ausführung umfasst das oder mindestens ein Montageelement einen von dem aufliegenden Abschnitt aufstehenden Befestigungswinkel. Die Befestigungswinkel lassen sich auf technologisch einfacher, kostengünstiger Weise durch Abkanten des bevorzugt eingesetzten Lochblechs bilden und sind (mit entsprechenden Öffnungen versehen) flexibel für unterschiedliche Montagesituationen einsetzbar.

In weiteren Ausführungen der Erfindung hat die Beschichtung eine Dicke im Bereich zwischen 1 und 7mm, insbesondere im Bereich zwischen 2 und 5mm. Es handelt sich also bei der Glastafel-Beschichtung um eine Dickschicht, deren genaue Dicke in Abhängigkeit von der Dicke und Größe der Glastafel und der spezifischen Zuordnung von Montageelementen gemäß dem Montageanforderungen festzulegen ist.

In einer weiteren Ausführung ist die Beschichtung derart dicht eingefärbt oder pigmentiert, dass das Glasbauelement im sichtbaren Bereich intransparent ist und das oder jedes Montageelement verdeckt. Dies gewährleistet ein optisch hochwertiges Erscheinungsbild einer mit den Glasbauelementen gebildeten Fassade oder Nachkonstruktion o. ä., unabhängig von der konkreten Konfiguration der Unterkonstruktion und zugeordneten Montageelemente. Die Beschichtung kann bei den angegebenen bevorzugten Dicke insbesondere auch weiß eingefärbt oder pigmentiert sein und gleichwohl jegliche Unterkonstruktion verdecken; selbstverständlich gilt dies ebenso für eine schwarze oder farbige Einfärbung oder Pigmentierung.

Bei der Beschichtung des Glasbauelements handelt es sich insbesondere um ein elastomer auf Siliconbasis bzw. um eine Siliconbeschichtung, d.h., dass das Ausgangsmaterial für die Beschichtung eine Siliconzusammensetzung ist.

Für die Beschichtung genutzte Siliconzusammensetzungen gemäß Anspruch 1 sind kondensationsvernetzende zweikomponentige Siliconzusammensetzungen. Es handelt sich dabei um eine zweikomponentige Siliconzusammensetzung bestehend aus einer Komponente **A** umfassend
- mindestens ein Hydroxylgruppen terminiertes Polydiorganosiloxan **P;**
und einer Komponente **B** umfassend
- mindestens einen Vernetzer für Polydiorganosiloxane; sowie
- mindestens einen Katalysator für die Vernetzung von Polydiorgano-siloxanen.

Geeignete Polydiorganosiloxane sind insbesondere Polydiorganosiloxan **P** der Formel (I), 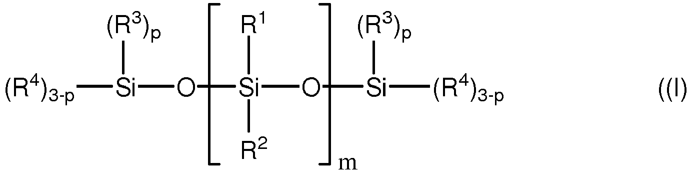 wobei
die Reste R¹, R² und R³ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
die Reste R⁴ für Hydroxylgruppen stehen;
der Index p für einen Wert von 0, 1 oder 2 steht; und der Index m so gewählt ist, dass das Polydiorganosiloxan P bei einer Temperatur von 23°C eine Viskosität von 10 bis 500'000 mPa·s aufweist.

Insbesondere stehen die Reste R¹ und R² für Alkylreste mit 1 bis 5, insbesondere mit 1 bis 3, C-Atomen, bevorzugt für Methylgruppen. Weiterhin ist der Index m insbesondere so gewählt, dass das Polydiorganosiloxan **P** bei einer Temperatur von 23 °C eine Viskosität von 1'000 bis 100'000 mPa·s. Die Viskosität wird typischerweise bestimmt nach DIN 53018.

Der Index p steht typischerweise für einen Wert von 2. Hydroxylgruppen terminierte Polydiorganosiloxane sind bekannt und kommerziell erhältlich. Auch die Herstellung derartiger Polydiorganosiloxane erfolgt in bekannter Art. Beispielsweise ist sie beschrieben in US 4,962,152, deren Offenbarung hiermit durch Bezugnahme eingeschlossen ist.

Die Komponente **B** der zweikomponentigen Siliconzusammensetzung umfasst mindestens einen Vernetzer für Polydiorganosiloxane. Insbesondere ist der Vernetzer ein Silan der Formel (II).

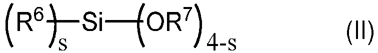

Dabei steht der Rest R⁶ unabhängig voneinander für einen linearen oder verzweigten, einwertigen Kohlenwasserstoffrest mit 1 bis 12 C-Atomen, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist.

Der Rest R⁷ steht unabhängig voneinander für ein Wasserstoffatom, oder für einen Alkylrest mit 1 bis 12 C-Atomen, oder für einen Oximrest mit 1 bis 12 C-Atomen, oder für einen Acylrest mit 1 bis 12 C-Atomen. Insbesondere steht der Rest R⁷ für einen Alkylrest mit 1 bis 5, insbesondere 1 bis 3, C-Atomen, bevorzugt für eine Methyl- oder für eine Ethylgruppe.

Der Index s steht für einen Wert von 0, 1 oder 2, bevorzugt für einen Wert von 0.

Für die Wahl des Silans der Formel (II) als Vernetzer für Polydiorganosiloxane können unterschiedliche Anforderungen an die Siliconzusammensetzung ausschlaggebend sein. Einerseits spielt die Reaktivität des Silans eine wichtige Rolle, wobei grundsätzlich höherreaktive Silane bevorzugt werden. Andererseits können auch toxikologische Gründe für die Wahl des Vernetzers ausschlaggebend sein. Beispielsweise ist deshalb Tetraethoxysilan als Vernetzer gegenüber Tetramethoxysilan bevorzugt.

Beispiele geeigneter Silane der Formel (II) sind Methyltrimethoxysilan, Chlormethyltrimethoxysilan, Ethyltrimethoxysilan, Propyltrimethoxysilan, Vinyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetra-n-propoxysilan oder Tetra-n-butoxysilan.

Besonders bevorzugt handelt es sich beim Silan der Formel (II) um Vinyltrimethoxysilan oder Tetraethoxysilan oder deren Mischung.

Weiterhin können die Silane auch bereits teilweise (ein Teil aller R⁷ = H) oder vollständig hydrolysiert (alle R⁷ = H) vorliegen. Aufgrund der stark erhöhten Reaktivität von teilweise oder vollständig hydrolysierten Silanen kann ihr Einsatz als Vernetzer vorteilhaft sein. Dem Fachmann ist dabei bekannt, dass es beim Einsatz von teilweise oder vollständig hydrolysierten Silanen zur Bildung von oligomeren Siloxanen, insbesondere zu Dimeren und/oder Trimeren kommen kann, welche durch Kondensation von hydrolysierten Silanen gebildet werden. Demnach können als Vernetzer für die zweikomponentige Siliconzusammensetzung auch oligomere Siloxane eingesetzt werden.

Beispielsweise sind geeignete oligomere Siloxane Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan und Decaethoxytetrasiloxan.

Selbstverständlich kann als Vernetzer für die zweikomponentige Siliconzusammensetzung auch eine beliebige Mischung der vorhergehend genannten Silane eingesetzt werden.

Der Anteil des Vernetzers für Polydiorganosiloxane beträgt vorzugsweise 0.1 bis 20 Gew.-%, insbesondere 1 bis 15 Gew.-%, bevorzugt 2 bis 10 Gew.-%, der gesamten Siliconzusammensetzung.

Beim Katalysator für die Vernetzung von Polydiorganosiloxanen handelt es sich insbesondere um eine zinnorganische Verbindung oder um ein Titanat oder um eine Kombination davon.

Bevorzugte zinnorganische Verbindungen sind Dialkylzinnverbindungen wie sie beispielsweise ausgewählt sind aus der Gruppe bestehend aus Dimethylzinndi-2-ethylhexanoat, Dimethylzinndilaurat, Di-n-butylzinndiacetat, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinn-distearat, Di-n-butylzinndimaleinat, Din-butylzinndioleat, Di-n-butylzinndiacetat, Di-n-octylzinndi-2-ethyl-hexanoat, Di-n-octylzinndi-2,2-dimethyloctanoat, Di-n-octylzinndimaleinat und Di-n-octylzinndilaurat.

Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei diejenigen, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe. Bevorzugte Titanate sind beispielsweise Tetrabutyl- oder Tetraisopropyltitanat.

Weiterhin geeignete Titanate weisen mindestens einen mehrzähnigen Liganden, auch Chelatligand genannt, auf. Insbesondere ist der mehrzähnige Ligand ein zweizähniger Ligand.

Geeignete Titanate sind beispielsweise unter den Handelsnamen Tyzor® AA, GBA, GBO, AA-75, AA-65, AA-105, DC, BEAT, IBAY kommerziell erhältlich von der Firma DuPont, USA.

Selbstverständlich ist es möglich oder in gewissen Fällen sogar bevorzugt, Mischungen verschiedener Katalysatoren einzusetzen. Beispielsweise ist der Katalysator eine Mischung einer zinnorganischen Verbindung mit einem Titanat.

Der Anteil des Katalysators für die Vernetzung von Polydiorganosiloxanen beträgt vorzugsweise 0.001 bis 10 Gew.-%, insbesondere 0.005 bis 4 Gew.-%, bevorzugt 0.01 bis 3 Gew.-%, der gesamten zweikomponentigen Siliconzusammensetzung.

Die zweikomponentige Siliconzusammensetzung kann gegebenenfalls noch weitere Bestandteile enthalten.

Derartige zusätzliche Bestandteile sind insbesondere Weichmacher, anorganische und/oder organische Füllstoffe, Härtungsbeschleuniger, Pigmente, Haftvermittler, Verarbeitungshilfsmittel, Rheologiemodifikatoren, Stabilisatoren, Farbstoffe, Inhibitoren, Hitzestabilisatoren, Antistatika, Flammschutzmittel, Biozide, Wachse, Verlaufsmittel, Thixotropierungsmittel und weitere dem Fachmann bekannte gängige Rohstoffe und Additive.

Geeignete weitere Bestandteile, insbesondere Haftvermittler und Weichmacher, welche in der zweikomponentigen Siliconzusammensetzung enthalten sein können, sind beispielsweise beschrieben in den Absätzen [0051] bis [0055] der Patentanmeldung US 2010/063190 A1, deren gesamte Offenbarung hiermit durch Bezugnahme eingeschlossen ist.

Beim Einsatz von derartigen optionalen Bestandteilen ist es wichtig darauf zu achten, dass Bestandteile, welche durch Reaktion untereinander oder mit anderen Inhaltsstoffen die Lagerstabilität der Zusammensetzung beeinträchtigen könnten, getrennt voneinander aufbewahrt werden.

Weiterhin ist es vorteilhaft, alle genannten, in der zweikomponentigen Siliconzusammensetzung gegebenenfalls vorhandenen Bestandteile so auszuwählen, dass die Lagerstabilität der beiden Komponenten der zweikomponentigen Siliconzusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen zweikomponentigen Siliconzusammensetzung führende Reaktionen während der Lagerung nicht in signifikantem Ausmass auftreten.

Als Weichmacher sind besonders trialkylsilylterminierte Polydialkylsiloxane geeignet, insbesondere trimethylsilylterminierte Polydimethylsiloxane. Bevorzugt werden trimethylsilylterminierte Polydimethylsiloxane mit Viskositäten zwischen 1 und 10'000 mPa·s (gemessen wiederum nach DIN 53 018). Besonders bevorzugt sind Viskositäten zwischen 10 und 1'000 mPa·s. Es können jedoch auch trimethylsilylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Obwohl besonders bevorzugt lineare trimethylsilylterminierte Polydimethylsiloxane als Weichmacher eingesetzt werden, können auch solche Verbindungen verwendet werden, die verzweigt sind. Derartige verzweigte Verbindungen entstehen dadurch, dass in den zu ihrer Herstellung dienenden Ausgangsstoffen kleine Mengen tri- oder tetrafunktioneller Silane verwendet werden. Es ist auch möglich, anstatt der Polysiloxan-Weichmacher, andere organische Verbindungen, wie zum Beispiel bestimmte Kohlenwasserstoffe oder deren Gemische, als Weichmacher einzusetzen. Derartige Kohlenwasserstoffe können aromatisch oder aliphatisch sein. Bei der Auswahl ist insbesondere darauf zu achten, dass diese Kohlenwasserstoffe eine geringe Flüchtigkeit und eine hinreichende Verträglichkeit mit den übrigen Bestandteilen der Siliconzusammensetzung aufweisen.

Der Anteil des Weichmachers beträgt vorzugsweise 2 bis 15 Gew.-%, insbesondere 5 bis 10 Gew.-%, der gesamten zweikomponentigen Siliconzusammensetzung.

Weiterhin kann die Zusammensetzung weiterhin mindestens einen Füllstoff aufweisen. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Weiterhin kann durch einen Füllstoff das Erscheinungsbild der Siliconzusammensetzung, insbesondere im ausgehärteten Zustand beeinflusst werden.

Geeignete Füllstoffe sind beispielsweise natürliche, gemahlene oder gefällte Calciumcarbonate, welche gegebenenfalls mit Fettsäuren, insbesondere Stearinsäure, beschichtet sind, calcinierte Kaoline, Aluminiumoxide, Aluminiumhydroxide, Kieselsäuren, insbesondere hochdisperse Kieselsäuren aus Pyrolyseprozessen, Russ, insbesondere industriell hergestellter Russ ("carbon black"), Aluminiumsilicate, Magnesium-Aluminiumsilicate, Zirkoniumsilicate, Quarzmehl, Christobalitmehl, Diatomeenerde, Glimmer, Eisenoxide, Titanoxide, Zirconiumoxide, Gips, Annalin, Bariumsulfat (BaSO₄, auch Baryt oder Schwerspat genannt), Borcarbid, Bornitrid, Graphit, Kohlefasern, Glasfasern oder Glashohlkugeln, deren Oberfläche gegebenenfalls mit einem Hydrophobierungsmittel behandelt ist. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

In einer bevorzugten Ausführungsform enthält die Siliconzusammensetzung hochdisperse Kieselsäuren aus Pyrolyseprozessen oder Calciumcarbonate als Füllstoff.

Es ist durchaus möglich und kann sogar von Vorteil sein, eine Mischung verschiedener Füllstoffe einzusetzen.

Eine geeignete Menge Füllstoff liegt beispielsweise im Bereich von 1 bis 40 Gew.-%, insbesondere 5 bis 30 Gew.-%, bevorzugt 10 bis 20 Gew.-%, bezogen auf die gesamte zweikomponentige Siliconzusammensetzung.

In einer ebenfalls bevorzugten Ausführungsform enthält die zweikomponentige Siliconzusammensetzung keine oder nur geringe Mengen an Füllstoffen.

In einer besonders bevorzugten Ausführungsform enthält die zweikomponentige Siliconzusammensetzung eine Mittel zum Einfärben der Zusammensetzung, wobei dieses Mittel insbesondere eine Farbpaste oder ein Pigment ist.

Bei der Applikation der zweikomponentigen Siliconzusam¬mensetzung werden die Komponenten **A** und **B,** beispielsweise durch Rühren, Kneten, Walzen oder dergleichen, oder in einem Mischer oder über einen Statikmischer, miteinander vermischt, wobei es zur Aushärtung der Zusammensetzung kommt. Die Aushärtung der zweikomponentigen Siliconzusammensetzung erfolgt insbesondere bei Raumtemperatur.

Insbesondere wird die zweikomponentige Siliconzusammensetzung so eingesetzt, dass das Gewichtsverhältnis der Komponente **A** zu Komponente **B** ≥ 1:1, insbesondere von 3:1 bis 15:1, bevorzugt von 10:1 bis 13:1, beträgt.

In einer Variante des vorgeschlagenen Verfahrens wird ein Ausgangsmaterial der Beschichtung im flüssigen Zustand auf die Glastafel aufgegossen oder -gespritzt, derart, dass sich eine ebene Oberfläche durch Verlaufen ausbildet. In einer anderen Ausführung kann vorgesehen sein, dass das Ausgangsmaterial der Beschichtung im flüssigen oder pastösen Zustand auf die Glastafel aufgerakelt wird. Auch ein weitgehend selbst-nivelierendes Aufgießen oder Aufspritzen der noch (dick-)flüssigen Zusammensetzung in Kombination mit einem anschließenden Rakeln zum Ausgleich noch bestehender Niveauunterschiede ist möglich.

Alternativ kann das Verfahren so ausgestaltet sein, dass das Ausgangsmaterial der Beschichtung im pastösen Zustand auf die Glastafel aufgewalzt wird, wobei insbesondere eine Kunststofffolie zwischen die Oberfläche des Ausgangsmaterials und die Oberfläche der Beschichtungswalze eingelegt und nach dem Aufbringen und vor dem Aushärten der Beschichtung wieder abgezogen wird. Hierdurch wird ein Anhaften von Material an der Walzoberfläche verhindert.

In einer Ausgestaltung der erwähnten Ausführungen wird der flüssige oder pastöse Zustand des Ausgangsmaterials mindestens unter anderem durch Einstellung einer Vorreaktionszeit vor dem Aufbringen auf die Glastafel eingestellt. Es versteht sich, dass daneben andere Parameter, wie ein Lösungsmittelanteil, die Temperatur etc., von Bedeutung sind.

Unabhängig von der konkreten Art des Aufbringens des Elastomer-Ausgangsmaterials wird das oder jedes zu befestigende Montageelement auf die gebildete Schicht "schwimmend" aufgesetzt (oder ggfs. leicht eingedrückt), so lange das Ausgangsmaterial noch nicht reagiert hat. In Abhängigkeit von der Zusammensetzung und deren Reaktionsablauf wird insbesondere ein Montageablauf gewählt, der zeitlich ausreichende Reserven für eine innige stoffflüssige Verbindung zwischen Glastafel und Montageelement(en) mittels der Elastomerschicht bietet. Es kann zweckmäßig sein, die Montageelemente beim Aufsetzen auf die noch (dick)-flüssige oder pastöse Ausgangsmaterial-Schicht seitlich fixiert zu halten, bis sie gemäß dem fortschreitenden Härten der Schicht durch diese selbst hinreichend fixiert sind.

Das Aushärten der Beschichtung kann, je nach deren Zusammensetzung, hinreichend schnell durch Lufttrocknung erfolgen, es können aber auch Infrarotheizer, ggfs. eine Zufuhr von feuchter Luft oder Dampf oder andere an sich bekannte Mittel zur Beschleunigung dieses Vorganges eingesetzt werden.

## Patentansprüche

1. Glasbauelement, mit einer kunststoffbeschichteten Glastafel und mehreren hieran befestigten Montageelementen,
wobei die Glastafel vollflächig, insbesondere mit einem Elastomer auf Siliconbasis, beschichtet ist und die Beschichtung zugleich eine Klebeverbindung mit einem auf der Glastafel aufliegenden Abschnitt der Montageelemente herstellt, wobei das Ausgangsmaterial für die Beschichtung eine kondensationsvernetzende, zweikomponentige Siliconzusammensetzung bestehend aus einer Komponente **A** umfassend
- mindestens ein Hydroxylgruppen terminiertes Polydiorganosiloxan **P;**
und einer Komponente **B** umfassend
- mindestens einen Vernetzer für Polydiorganosiloxane; sowie
- mindestens einen Katalysator für die Vernetzung von Polydiorganosiloxanen,
ist, und wobei der Vernetzer ein Silan der Formel (II) 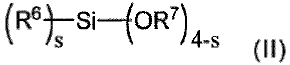 ist, wobei R⁶ unabhängig voneinander für einen linearen oder verzweigten, einwertigen Kohlenwasserstoffrest mit 1 bis 12 C-Atomen, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist, R⁷ für ein Wasserstoffatom, oder für einen Alkylrest mit 1 bis 12 C-Atomen, oder für einen Oximrest mit 1 bis 12 C-Atomen, oder für einen Acylrest mit 1 bis 12 C-Atomen steht und der Index s für einen Wert von 0, 1 oder 2 steht.

2. Glasbauelement nach Anspruch 1, wobei der aufliegende Abschnitt jedes Montageelements durch ein Lochblech gebildet ist, dessen Löcher mindestens teilweise von der Beschichtung der Glastafel durchdrungen sind.

3. Glasbauelement nach Anspruch 1 oder 2, wobei die Oberfläche der Glastafel zu mehr als einem Viertel, insbesondere zu einem überwiegenden Flächenanteil, mit aufliegenden Abschnitten mehrerer Montagelemente bedeckt ist.

4. Glasbauelement nach einem der vorangehenden Ansprüche, wobei die mehreren Montageelemente einen von dem aufliegenden Abschnitt aufstehenden Befestigungswinkel umfassen.

5. Glasbauelement nach einem der vorangehenden Ansprüche, wobei die Beschichtung eine Dicke im Bereich zwischen 1 und 7mm, insbesondere im Bereich zwischen 2 und 5mm, hat.

6. Glasbauelement nach einem der vorangehenden Ansprüche, wobei die Beschichtung derart dicht pigmentiert ist, dass das Glasbauelement im sichtbaren Bereich intransparent ist und die Montageelemente verdeckt.

7. Glasbauelement nach Anspruch 1, wobei die zweikomponentige Siliconzusammensetzung zusätzlich mindestens eine Farbpaste oder ein Farbpigment umfasst.

8. Verfahren zur Herstellung eines Glasbauelements nach einem der vorangehenden Ansprüche, wobei ein Ausgangsmaterial der Beschichtung im flüssigen oder pastösen Zustand auf die Glastafel derart aufgegossen oder -gespritzt wird, dass sich eine ebene Oberfläche durch Verlaufen ausbildet, oder aufgerakelt wird oder aufgewalzt wird.

9. Verfahren nach Anspruch 8, wobei beim Aufwalzen des Ausgangsmaterials eine Kunststofffolie zwischen die Oberfläche des Ausgangsmaterials und die Oberfläche der Beschichtungswalze eingelegt und nach dem Aufbringen und vor dem Aushärten der Beschichtung wieder abgezogen wird.

10. Verfahren nach Anspruch 8 oder 9, wobei der flüssige oder pastöse Zustand des Ausgangsmaterials mindestens unter anderem durch Einstellung einer Vorreaktionszeit vor dem Aufbringen auf die Glastafel eingestellt wird.

## Claims

1. Glass structural element, having a plastic-coated glass panel and a plurality of assembly elements attached thereto,
the glass panel being coated over its full area, especially with a silicone-based elastomer, and the coating at the same time producing an adhesive bond to a section of the assembly elements that lies on the glass panel, the starting material for the coating being a condensation-crosslinking, two-component silicone composition consisting of a component A comprising
- at least one hydroxyl-terminated polydiorganosiloxane P;
and a component B comprising
- at least one crosslinker for polydiorganosiloxanes; and also
- at least one catalyst for the crosslinking of polydiorganosiloxanes,
and the crosslinker being a silane of the formula (II) 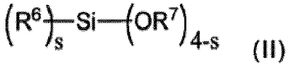 wherein R⁶ independently at each occurrence is a linear or branched, monovalent hydrocarbon radical having 1 to 12 carbon atoms, which optionally has one or more heteroatoms, and optionally has one or more C-C multiple bonds and/or optionally has cycloaliphatic and/or aromatic fractions, R⁷ is a hydrogen atom, or is an alkyl radical having 1 to 12 carbon atoms, or is an oxime radical having 1 to 12 carbon atoms, or is an acyl radical having 1 to 12 carbon atoms, and the index s has a value of 0, 1 or 2.

2. Glass structural element according to Claim 1, wherein the lying-on section of each assembly element is formed by a perforated sheet whose perforations are at least partly penetrated by the coating of the glass panel.

3. Glass structural element according to Claim 1 or 2, wherein the surface of the glass panel is covered to an extent of more than one quarter, more particularly to an extent of a predominant area fraction, with lying-on sections of a plurality of assembly elements.

4. Glass structural element according to any of the preceding claims, wherein the plurality of assembly elements include an attachment angle standing up from the lying-on section.

5. Glass structural element according to any of the preceding claims, wherein the coating has a thickness in the range between 1 and 7 mm, more particularly in the range between 2 and 5 mm.

6. Glass structural element according to any of the preceding claims, wherein the density of pigmentation of the coating is such that the glass structural element in the visible range is non-transparent and conceals the assembly elements.

7. Glass structural element according to Claim 1, wherein the two-component silicone composition further comprises at least one colour paste or colour pigment.

8. Method for producing a glass structural element according to any of the preceding claims, wherein a starting material of the coating is applied in the liquid or pasty state to the glass panel by pouring or spraying such that a planar surface is formed by levelling, or is applied by knife coating or by roll coating.

9. Method according to Claim 8, wherein, when the starting material is applied by roll coating, a polymeric film is inserted between the surface of the starting material and the surface of the coating roll and is removed again after the applying and before the curing of the coating.

10. Method according to Claim 8 or 9, wherein the liquid or pasty state of the starting material is established by means at least including the establishment of a preliminary reaction time before the applying to the glass panel.

## Revendications

1. Composant en verre, comprenant une plaque en verre revêtue de matière plastique et plusieurs éléments de montage qui y sont fixés,
la plaque en verre étant revêtue sur toute la surface, notamment avec un élastomère à base de silicone, et le revêtement réalisant en même temps une liaison par collage avec une section des éléments de montage en appui sur la plaque en verre, le matériau de départ pour le revêtement étant une composition de silicone bicomposante, réticulant par condensation, constituée par un composant **A** comprenant :
- au moins un polydiorganosiloxane **P** terminé par des groupes hydroxyle ;
et un composant **B** comprenant :
- au moins un agent de réticulation pour polydiorganosiloxanes ; ainsi que
- au moins un catalyseur pour la réticulation de polydiorganosiloxanes,
et l'agent de réticulation étant un silane de la formule (II) : 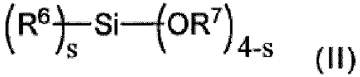 dans laquelle les R⁶ représentent indépendamment les uns des autres un radical hydrocarboné monovalent, linéaire ou ramifié, de 1 à 12 atomes C, qui comprend éventuellement un ou plusieurs hétéroatomes, et éventuellement une ou plusieurs liaisons multiples C-C et/ou éventuellement des fractions cycloaliphatiques et/ou aromatiques, R⁷ représente un atome d'hydrogène, ou un radical alkyle de 1 à 12 atomes C, ou un radical oxime de 1 à 12 atomes C, ou un radical acyle de 1 à 12 atomes C, et l'indice s représente une valeur de 0, 1 ou 2.

2. Composant en verre selon la revendication 1, dans lequel la section en appui de chaque élément de montage est formée par une tôle perforée, dont les perforations sont au moins partiellement pénétrées par le revêtement de la plaque en verre.

3. Composant en verre selon la revendication 1 ou 2, dans lequel la surface de la plaque en verre est recouverte à hauteur de plus d'un quart, notamment à hauteur d'une proportion de surface prédominante, avec des sections en appui de plusieurs éléments de montage.

4. Composant en verre selon l'une quelconque des revendications précédentes, dans lequel les éléments de montage comprennent une équerre de fixation dressée à partir de la section en appui.

5. Composant en verre selon l'une quelconque des revendications précédentes, dans lequel le revêtement a une épaisseur dans la plage comprise entre 1 et 7 mm, notamment dans la plage comprise entre 2 et 5 mm.

6. Composant en verre selon l'une quelconque des revendications précédentes, dans lequel le revêtement est pigmenté en une densité telle que le composant en verre est non-transparent dans la plage visible et recouvre les éléments de montage.

7. Composant en verre selon la revendication 1, dans lequel la composition de silicone bicomposante comprend en outre au moins une pâte colorée ou un pigment coloré.

8. Procédé de fabrication d'un composant en verre selon l'une quelconque des revendications précédentes, dans lequel un matériau de départ du revêtement est versé ou pulvérisé à l'état liquide ou pâteux sur la plaque en verre, de telle sorte qu'une surface plane se forme par écoulement, ou est enduit à la lame ou enduit au rouleau.

9. Procédé selon la revendication 8, dans lequel, lors de l'enduction au rouleau du matériau de départ, une feuille en matière plastique est insérée entre la surface du matériau de départ et la surface du rouleau de revêtement et enlevée après l'application et avant le durcissement du revêtement.

10. Procédé selon la revendication 8 ou 9, dans lequel l'état liquide ou pâteux du matériau de départ est ajusté au moins entre autres par ajustement d'un temps de pré-réaction avant l'application sur la plaque en verre.
